# EUROPÄISCHE PATENTSCHRIFT

(11) **EP 4 011 601 B1**
(45) Veröffentlichungstag und Bekanntmachung des Hinweises auf die Patenterteilung: **16.04.2025**
(21) Anmeldenummer: 21207918.0
(22) Anmeldetag: 12.11.2021
(51) Int. Cl.: B29C 64/153, B33Y 70/00, B33Y 80/00

(54) **VERFAHREN ZUR HERSTELLUNG EINES BAUTEILS IM WEGE DER ADDITIVEN FERTIGUNG**
METHOD FOR PRODUCING A COMPONENT BY WAY OF ADDITIVE MANUFACTURING
PROCÉDÉ DE FABRICATION D'UN COMPOSANT PAR FABRICATION ADDITIVE

(30) Priorität: 10.12.2020 DE 102020132987
(43) Veröffentlichungstag der Anmeldung: 15.06.2022
(73) Patentinhaber: REHAU Industries SE & Co. KG, 95111 Rehau (DE)
(72) Erfinder: Eibl, Stefan, 95028 Hof (DE); Häupler, Bernhard, 95032 Hof (DE); Matthes, Philipp, 95030 Hof (DE)

(56) Entgegenhaltungen:
- EP-A1- 3 135 731
- EP-A2- 2 025 498
- EP-A2- 2 406 318
- WO-A1-2018/049365
- WO-A1-2018/197392
- WO-A1-2019/096805
- WO-A1-2019/221733
- WO-A1-2020/058312
- DE-A1- 102018 212 447
- US-A1- 2020 377 719

## Beschreibung

Die Erfindung betrifft ein Verfahren zur Herstellung eines Bauteils im Wege der additiven Fertigung, insbesondere durch selektives Lasersintern (SLS), wobei als Grundmaterial ein pulverförmiger Werkstoff aus Kunststoff eingesetzt wird, der ein Blend aus einem Polyamid sowie zur Verbesserung der Schlagzähigkeitseigenschaften des Bauteils ein thermoplastisches Elastomer enthält, und wobei im hergestellten Bauteil der Gewichtsanteil des thermoplastischen Elastomers 10 bis 50 %, insbesondere 20 bis 40 %, beträgt.

Das Lasersintern gehört zur Gruppe der generativen Schichtbauverfahren. Hierbei wird das Werkstück sukzessive Schicht für Schicht aufgebaut, wobei die Bauplattform nach und nach nach unten verfahren wird. Durch die Wirkung der Laserstrahlen ist es möglich, praktisch beliebige dreidimensionale Geometrien zu erzeugen, wobei insbesondere auch Hinterschneidungen kein fertiungstechnisches Problem darstellen. Dadurch lassen sich Werkstücke erzeugen, die mittels konventioneller mechanischer oder gießtechnischer Verfahren nicht herstellbar sind.

Die Zähigkeitseigenschaften von mit selektivem Lasersintern hergestellten Bauteilen sind allerdings zum Teil nicht zufriedenstellend. Hierdurch ist das Anwendungsspektrum von SLS-Verfahren in der Praxis begrenzt. WO2019/221733A1 offenbart ein Verfahren zur Herstellung eines Bauteils im Wege der additiven Fertigung, insbesondere durch selektives Lasersintern. Das Baumaterial umfasst Polymerpartikel umfassend Polypropylen und ein Elastomer. Polyamidfaser werden als Zusatzstoffe in einer Liste erwähnt.

Vor diesem Hintergrund liegt der Erfindung die Aufgabe zugrunde, ein Verfahren mit den eingangs beschriebenen Merkmalen anzugeben, welches sich durch verbesserte Materialeigenschaften des damit hergetellten Bauteils auszeichnet.

Erfindungsgemäß wird diese Aufgabe dadurch gelöst, dass der Kunststoff zur Verbesserung der Schlagzähigkeitseigenschaften des Bauteils zusätzlich ein Elastomer und/oder ein thermoplastisches Elastomer enthält. Beispielsweise wird als pulverförmiger Werkstoff ein Blend aus einem PA sowie einem TPE verwerdet. Bei dem thermoplastischen Elastomer kann es sich grundsätzlich um ein thermoplastisches Polyamidelastomer (TPE-A), ein thermoplastisches Elastomer auf Olefinbasis (TPE-O, bspw. PP/EPDM), ein thermoplastisches Vulkanisat bzw. vernetztes thermoplastisches Elastomer auf Olefinbasis (TPE-V, bspw. PP/EPDM), ein thermoplastisches Copolyesterelastomer (TPE-E), ein thermoplastisches Styrol-Blockcopolymere (TPE-S, z.B. SBS, SEBS, SEPS, SEEPS oder MBS) oder ein thermoplastisches Elastomer auf Urethanbasis (TPE-U) handeln. Grundsätzlich kann die Polymerkomponente und/oder das Elastomer und/oder das thermoplastische Elastomer in seiner/ihrer Ausgangsform vorliegen und / oder durch Pfropfung und / oder durch Copolymerisation und / oder Kondensations- und / oder Additionsreaktion und / oder durch radikalische Reaktion mit und / oder ohne Katalysator mit mindestens einer funktionellen Gruppe modifiziert sein. Die funktionelle Gruppe kann ausgewählt sein aus Hydroxy-, Amino-, Imino-, Imido-, Amido-, Carbonsäure-, Carbonsäureester-, Carbonsäureanhydrid-, Imid-, Amid-, O-xazolin-, Epoxy-, Glycidylgruppe, Mercaptan, Carbamat, Isocyanat, Cyanat, Amino-AmidVerbindung, Alkohol, Silan, Silyl-, Alkoxysilylgruppe, Silazan, Siloxan, Methacrylat, Methyl(meth)acrylat, Acrylsäure, Methacrylsäure, Glycidylacrylsäure, Glycidylmethacrylsäure, Acrylsäureester, Methacrylsäureester, Maleinsäure, Maleinsäureanhydrid, Fumarsäure, Itaconsäure, Citraconsäure, Aconitsäure, Vinyl-Verbindung, Alkyl-aminoethyl-(meth)acrylsäure, Alkyl-aminopropyl-(meth)acrylsäure, Aminoalkyl-Verbindungen, Alkenylen, quartäre Ammonium-Gruppen, Sulfonsäure-, Phosphonsäure-, Vinylacetat-Gruppen und ionischen Gruppen, wie Carboxylat-, Sulfonat- und Phosphonatgruppe. Es liegt im Rahmen der Erfindung, wenn die funktionellen Gruppen mit Schutzgruppen, die bei höherer Temperatur unter Demaskierung der funktionellen Gruppen abgespalten werden können, modifiziert sind. Erfindungsgemäss beträgt im hergestellten Bauteil der Gewichtsanteil des Elastomers und/oder des thermoplastischen Elastomers 10 bis 50 %, insbesondere 20 bis 40 %. Zweckmäßigerweise wird ein pulverförmiger Werkstoff mit einer mittleren Partikelgröße von 1 bis 500 µm, vorzugsweise 10 bis 200 µm, insbesondere 20 bis 100 µm verwendet. Vorzugsweise sind die entsprechenden Partikel zumindest im Wesentlichen rund (d.h. annhähernd kreis- bzw. kugelförmig) ausgebildet.

Ergänzend zum thermoplastischen Elastomer kommt ferner zum Einsatz ein Elastomer, z.B. ausgewählt aus einem Kautschuk, vorzugsweise einem Acrylnitril-Elastomer (ACM), einem cis-1,4-Polybutadien, Chloropren, einem Neoprenkautschuk (CR), einem chlorsulfonierten Polyethylen (CSM), einem Ethylen-Propylen-Dien-Terpolymer (EPDM), einem amorphen Propylen-Ethylen-Dien-Terpolymer (PEDM), einem lonomer, einem Olefincopolymer, einem Olefinterpolymer, einem Poly-alpha-Olefin-Copolymer, einem Poly-alpha-Olefin-Terpolymer, einem Polyolefinelastomer, einem Ethylen-Vinylalkohol-Copolymer, einem Ethylen-Propylen-Elastomer (EPM), einem Fluorelastomer (FKM), einem Ethylen-Acryl-Polymer (AEM), einem Acrylnitril-Butadien-Elastomer (NBR), einem hydrierten Acrylnitril-Butadien-Kautschuk (HNBR), einem Naturkautschuk (NR), einem chlorierten Polyethylen, (PE-C), einem Polyurethan (PU), einem Polyesterurethan (AU), einem Polyetherurethan (EU), einem Polyacrylatkautschuk (ACM), einem Butadienkautschuk (BR), einem Isoprenkautschuk (IR), einem Polyblend aus Nitrilkautschuk mit Polyvinylchlorid (NBR/PVC), einem Styrol-Butadien-Kautschuk (SBR), einem Styrol-Butadien-Kautschuk (SSBR), einem emulsionspolymerisierten Styrol-Butadien-Kautschuk (ESBR), einem Brombutylkautschuk (BIIR), einem Chlorbutylkautschuk (CIIR), einem Butadien-Kautschuk (BR), einem chlorsulfonierten Polyethylen (CSM), einem Epichlorhydrinkautschuk (ECO, CO, ETER), einem Ethylen-Vinylacetat-Kautschuk (EVA), einem Silikonkautschuk (MQ, VMQ, PVMQ, FVMQ), einem fluorierten Methylsilikonkautschuk (MFQ), einem perfluorierten Propylen-Kautschuk (FFPM) , einem Perfluorcarbon-Kautschuk (FFKM), einem Polynorbenkautschuk (PNR), einem trans-Polyoctenamer-Kautschuk (TOR), einem vernetzten Thermoplastischen Elastomeren auf Olefinbasis (TPV), einem Thermoplastischen Elastomeren auf Olefinbasis (TPO), einem Thermoplastischen Elastomeren auf Urethanbasis (TPU), einem Thermoplastischen Polyurethan-Silikonelastomeren, einem Thermoplastischen Polyesterelastomeren (TPE-E), einem Styrol-Blockcopolymeren (TPE-S bspw. SBS, SEBS, SEPS, SEEPS und MBS), einem Thermoplastischen Copolyamiden (TPE-A), einem vernetzten oder teilvernetzten Thermoplast oder einem solchen Elastomer, einem thermoplastischen Silikon-Block-Copolymer.

Im Rahmen der Erfindung liegt es ferner, dass der Kunststoff enhält:
- ein linearkettiges und/oder verzweigtkettiges und/oder hyperverzweigtes und/oder dendritisches amorphes und/oder mikrokristallines und/oder teilkristallines und/oder flüssigkristallines aromatisches und/oder teilaromatisches und/oder aliphatisches und/oder teilaliphatisches und/oder cycloaliphatisches Oligomer oder Polymer oder Homopolymer oder Copolymer oder Block-Copolymer oder Random-Copolymer, und / oder
- ein chemisch modifiziertes Inearkettiges und/oder verzweigtkettiges und/oder hyperverzweigtes und/oder dendritisches amorphes und/oder mikrokristallines und/oder teilkristallines und/oder flüssigkristallines aromatisches und/oder teilaromatisches und/oder aliphatisches und/oder teilaliphatisches und/oder cycloaliphatisches Oligomer oder Polymer oder Copolymer oder Block-Copolymer oder Random-Copolymer, und / oder
- einen Blend aus
   einem linearkettigen und/oder verzweigtkettigen und/oder hyperverzweigten und/oder dendritischen amorphen und/oder mikrokristallinen und/oder teilkristallinen und/oder flüssigkristallinen aromatischen und/oder teilaromatischen und/oder aliphatischen und/oder teilaliphatischen und/oder cycloaliphatischen Oligomeren oder Polymeren oder Copolymeren oder Block-Copolymeren oder Random-Copolymeren, das in seiner Ausgangsform vorliegt und/oder durch eine Pfropfungsreaktion und/oder durch eine Additionsreaktion und/oder durch eine Kondensationsreaktion mit mindestens einer funktionellen Gruppe modifiziert ist, und das optional eine Mischung und/oder ein Blend mehrerer Polymere ist.

Als Material für den Kunststoff können ferner insbesondere zum Einsatz kommen: Copolyamide, Polyamidharze, Polyetheramide, Polyesteramide, Polyamid-Schmelzklebstoffe, die durch Kondensations- und/oder Ringöffnungspolymerisation aus Aminen und/oder Carbonsäuren und/oder Lactamen erhalten werden, wobei diese polymere Fettsäuren und/oder monomere Fettsäuren und/oder dimere Fettsäuren und/oder trimere Fettsäuren und/oder Dicarbonsäuren und/oder Dimerdiamine und/oder Polyetherdiamine und/oder langkettige Aminocarbonsäuren und/oder Lactame und/oder primäre lineare Alkylendiamine und/oder lineare Alkylendiamine und/oder verzweigtkettige Alkylendiamine und/oder heterocyclische sekundäre Diamine und/oder cycloaliphatische Diamine und/oder Polyetherpolyole enthalten. Die Amine können lineare, verzweigte, nicht-cyclische und cycloaliphatische C4-C18-Kohlenwasserstoffverbindungen mit zwei primären Aminogruppen, wie beispielsweise 2-Methyl-1,5-diaminopentan, Hexamethylendiamin, 1,8-Diaminooctan, 2-Methyl-1,8-Oktandiamin, 1,9-Diaminononan, 1,10-Diaminodecan 1,11-Diaminoundecan, 1, 12-Diaminododecan, Diaminocyclohexan, Bis(4-amino-3-methyl-cyclohexyl)methan, Bis(4-aminocyclohexyl)methan, Bis(4-amino-3,5-dimethylcyclohexyl)methan, 2,2,4-Trimethylhexamethylendiamin, 2,4,4-Trimethylhexamethylendiamin, Isophorondiamin, 3-Aminomethyl-3,5,5-trimethylcyclohexylamin, Bis-(3-methyl-4-aminocyclohexyl)methan, 4,4'-Bis(aminocyclohexyl)methan, 3,3'-Dimethyl-4,4'-bis(aminocyclohexyl)-methan, und araliphatische und / oder aromatische C6-C18-Kohlenwasserstoffverbindungen mit zwei primären Aminen, wie beispielsweise m-Xylylendiamin und p-Xylylendiamin und Phenylendiamin, umfassen. Die polymeren Fettsäuren und/oder monomeren Fettsäuren und/oder dimeren Fettsäuren und/oder trimeren Fettsäuren und/oder Dicarbonsäuren können ausgewählt sein aus Tallölfettsäure, Linolensäure, Ölsäure, monomeren Fettsäuren mit 12 bis 22 Kohlenstoffatomen, Fettsäuren mit wenigstens 2 primären Aminogruppen, welche 2 bis 40 Kohlenstoffatome aufweisen, diaminoterminierten Dimerfettsäuren, Oxalsäure, Malonsäure, Bernsteinsäure, Glutarsäure, Adipinsäure, Pimelinsäure, Korksäure, Azelainsäure, Sebacinsäure, Undecandisäure, Decandicarbonsäure, Brassylsäure, Tetradecandisäure, Thapsiasäure, Octadecendicarbonsäure, Eicosandicarbonsäure, Docosandicarbonsäure Maleinsäure, 2,5-Furandicarbonsäure, Aminocarbonsäuren, 1,14-Tetradecandisäure, Terephthalsäure, Isophthalsäure und Fumarsäure. Die Polyetherdiamine können aus aliphatischen Diaminen mit 2 bis 40 Kohlenstoffatomen bestehen. Die langkettigen Aminocarbonsäuren können ausgewählt sein aus 11-Aminoundecansäure, 9-Aminononansäure, 10-Aminodecansäure, 12-Aminododecansäure, 11-Aminoundecansäure und N-Heptyl-11-Aminoundecansäure. Die Lactame können gesättigte, monocyclische Lactame mit 6 bis 16 Kohlenstoffatomen sein, wie beispielsweise Caprolactam, Capryllactam, Önanthlactam, Laurinlactam, Valerolactam und Caprolactam und Lauryllactam umfassen. Die primären linearen Alkylendiamine und/oder verzweigtkettigen Alkylendiamine und/oder heterocyclischen sekundären Diamine und/oder cycloaliphatischen Diamine mit 2 bis 10 Kohlenstoffatomen können beispielsweise Ethylendiamin, 1,3-Diaminopropan, 1,4-Diaminobutan, 2-Methyl-1,5-pentandiamin, Piperazin und Dipiperidylpropan und Hexamethylendiamin umfassen. Als Polyetherpolyole können Polyethylenglykol, Polypropylenglykol oder Polytetrahydrofuran, welche primäre Aminoendgruppen aufweisen, verwendet werden. Das Molekulargewicht der Polyetherpolyole mit Aminoendgruppen kann zwischen 700 g/mol und 3 500 g/mol oder auch zwischen 1 200 g/mol und 2 500 g/mol betragen. Beispiele für aminoterminierte Polyetherpolyole sind Bis-(3-aminopropyl)-polytetrahydrofuran mit einem Molekulargewicht zwischen 700 g/mol und 3 500 g/mol oder Bis-(2-aminopropyl)-polyoxypropylen mit einem Molekulargewicht zwischen 1 200 g/mol und 2 500 g/mol. Cycloaliphatische Diamine können ausgewählt sein aus Bis(3,5-dialkyl-4-aminocyclohexyl)methan, Bis(3,5-dialkyl-4-aminocyclohexyl)ethan, Bis(3,5-dialkyl-4-aminocyclohexyl)propan, Bis(3,5-dialkyl-4-aminocyclohexyl)butan, Bis(3-methyl-4-aminocyclohexyl)methan, p-Bis(aminocyclohexyl)methan und Isopropyliden-di(cyclohexylamin).

Konkrete Beispiele für Polyamide, Copolyamide, Polyamidharze, Polyetheramide, Polyesteramide, Polyamid-Schmelzklebstoffe sind: PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PATMDC10, PATMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/ MACMT/12, PA 6I/6T/MACMI/MACMT, PA 6I/6T/MACMI/ MACMT/12, PA MACM6/11, PA MACM6/12, PA MACM10/11, PAMACM10/12, PA MACM10 /1010, PA MACM12/1012, PA MACM 12/1212, PA MACM14/1014, PA MACM 14/1214, PA MACM18/1018, PA 6I/6T/MACMI/MACMT/MACM12/612, PA 6I/6T/MACMI/ MACMT/MACM12, PA MACMI/MACMT/MACM12/12, PA MACMI/ MACMT/MACM12, PA 6I/6T/MACMI/MACMT/12, PA 6I/6T/6N/ MACMI/ MACMT/MACMN, PATMDC12/TMDCT/TMDC36, PA TMDC12/TMDCI, PA TMDC12/TMDCI/TMDC36, PA TMDC12/TMDCT, PA MACM10/PACM10, PA MACM12/PACM12, PA MACM14/PACM14, PA 6 [Polycaprolactam - ε-Caprolactam], PA 46, PA 49, PA 410, PA 411, PA 412, PA 413, PA 414, PA 415, PA 416, PA 418, PA 436, PA 56, PA 510, PA 512, PA 514, PA 66 [Poly(hexamethylenadipamid) Hexamethylendiamin + Adipinsäure], PA 69, PA 610 [Poly(hexamethylensebacamid) Hexamethylendiamin + Sebacinsäure], PA 611, PA 612 [Poly(hexamethylendodecanamid), Hexamethylendiamin + Dodecandisäure], PA 613, PA 614, PA 615, PA 616, PA 617, PA 618, PA 1010, PA 66/6, PA 6/66/610, PA 6/66/12, PA 6/12, PA 11 [Poly-11-aminoundecanamid (11-Aminoundecansäure)], PA 12 [Polylaurinlactam, (Poly-ω-Laurinlactam)], PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12,PA PACM13, PA PACM14, PA PACM15, PA PACM16, PA PACM17, PA PACM18, PA PACM36, PA 4T/6T, PA 4T/8T, PA 6T/8T, PA 4T/MPMDT, PA 4T/4I, PA 5T/5I, PA 6T/6I, PA6T (Hexamethylendiamin HMD, Terephthalsäure), PA 9T, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, PA 6/3T.

Ferner kann als Kunststoff ein styrolbasiertes Polymer zum Einsatz kommen, z.B.: ein Polystyrol, ein Polystyrol-Copolymer, ein Methylmethacrylat-Acrylnitril-Butadien-StyrolCopolymer, ein Acrylester-Styrol-Acrylnitril-Copolymer, ein Styrol-Acrylnitril-Copolymer, eineStyrol-Methyl(meth)acrylat-Copolymer, ein Ethylen-Styrol-Interpolymer, ein Styrol-Maleinsäureanhydrid-Copolymer, ein Styrol-Maleimid-Copolymer, ein Styrol-N-Phenylmaleinimid-Copolymer, ein Styrol-Block-Copolymer, umfassend Styrol-Butadien-Styrol-Triblockcopolymere (SBS), Styrol-Isopren-Styrol-Triblockcopolymere (SIS), Styrol-(Isopren-Butadien)-Styrol-Triblockcopolymer (SIBS), Styrol-Isopren-Blockcopolymer (SI), Styrol-Isobuten-Styrol-Triblockcopolymere, Styrol-Ethylen-Butylen-Styrol-Copolymere (SEBS), Styrol-Ethylen-Butylen-Blockcopolymer (SEB), Styrol-(Ethylen-Propylen)-Blockcopolymere (SEP), Styrol-(Ethylen-Propylen)-Styrol-Triblockcopolymere (SEPS), Styrol-(Ethylen-Ethylen / Propylen)-Styrol-Triblockcopolymere (SEEPS), hydrierte und / oder teilweise hydrierte Styrol-Butadien-Kautschuke, hydrierte und / oder teilweise hydrierte Styrol-Isopren-Kautschuke, ein Acrylnitril-Butylacrylat-Methyl(meth)acrylat-Styrol-Copolymer.

Für den Kunststoff zum Einsatz kommen kann ein Polyurethan. Als Polyurethan kann zum Einsatz kommen ein thermoplastisches Polyurethan und/oder ein Polyurethan-Schmelzklebstoff. Thermoplastische Polyurethane und / oder Polyurethan-Schmelzklebstoffe werden z.B. gewonnen durch Umsetzung von aliphatischen und/oder cycloaliphatischen und/oder araliphatischen und/oder aromatischen Isocyanaten, wie beispielsweise Tri-, Tetra-, Penta-, Hexa-, Hepta- und/oder Oktamethylendiisocyanat, 2-Methyl-pentamethylen-1,5-diisocyanat, 2-Ethyl- butylen-1,4-diisocyanat, Pentamethylen-1,5-diisocyanat, Butylen-1,4-diisocyanat, 1-Isocyanato-3,3,5-trimethyl-5-isocyanatomethyl-cyclohexan, Isophorondiisocyanat (IPDI), 1,4-Bis(isocyanatomethyl)cyclohexan, 1,3-Bis(isocyanatomethyl)cyclohexan (HXDI), 2,4-p-Phenylendiisocynat (PPDI), 2,4-Tetramethylenxylendiisocyant (TMXDI), 4,4'-, 2,4'- und 2,2'-Dicyclohexylmethan-diisocyanat (H12 MDI), 1,6-Hexamethylen-diisocyanat (HDI), 1,4-Cyclohexan-diisocyanat, 1-Methyl-2,4- und/oder-2,6-cyclohexan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyldiisocyanat, 1,2-Diphenylethandiisocyanat und/oder Phenylendiisocyanat, mit einer Verbindung, die gegenüber Isocyanat reaktive Gruppen besitzt, die ausgewählt ist aus Hydroxyl-, Mercapto-, Amino- und Carbonsäuregruppen. Diese Verbindungen sind beispielsweise Polyesteröle, Polyetheröle, Polycarbonatdiole, difunktionelle Polyole, Polyhydroxylverbindungen, Polycaprolactone, Polyetherpolyole, Ethylenoxid, Propylenoxid, Butylenoxid, Polypropylenglykol, Polytetrahydrofuran, Copolyester, die auf der Basis von Adipinsäure, Bernsteinsäure, Pentandisäure, Sebazinsäure und 1,2-Ethandiol oder 1,4-Butandiol, 1,6-Hexandiol, 3-Methyl-Pentan-1,5-diol, Polytetramethylenglykol und Polytetrahydrofura gewonnen werden. Diese Verbindungen können unter anderem auch Kettenverlängerer, wie beispielsweise 1,2-Ethylenglycol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol aufweisen.

Für den Kunststoff zum Einsatz kommen kann ein Polyolefin. Polyolefine werden vorzugsweise ausgewählt aus einem Polyolefinhomo- und / oder Polyolefincopolymer, vorzugsweise einem Polypropylen (PP) oder einem Polyethylen (PE) oder einem Polybutylen (PB), einem cyclischen Polyolefincopolymer (Cycloolefin-Copolymere COC, Cycloolefinpolymere COP, cyclische Blockcopolymere CBC), einem vernetzten Polyolefin, vorzugsweise einem vernetzten Polyethylen (PE-X), einem Poly-alpha-Olefin-Copolymer, einem Polyolefinelastomer, einem Ethylen-Vinylalkohol-Copolymer, einem Ethylen-Acrylsäure-Copolymer, beispielsweise einem Ethylen-Methacrylsäure-Copolymer EMAA, Polyolefin-Copolymere können Ethylen-α-Olefin-Copolymere, [α-Olefine (C3-C18): Propen, 1-Buten, 1-Penten, 1-Hexen, 1-Octen, 1-Decen 1-Dodecen], Propylen- α-Olefin-Copolymere, [α-Olefine (C2-C18): Ethylen, 1-Buten, 1-Penten, 1-Hexen, 1-Octen, 1-Decen 1-Dodecen], Ethylen-Propylen-Dien-Copolymere [α-Olefine (C3-C18): Propen, 1-Buten, 1-Penten, 1-Hexen, 1-Octen, 1-Decen 1-Dodecen], Ethylen-Propylen-Copolymere. Polyolefinhomo-Polymere umfassen Polyethylen geringer Dichte (linear low density polyethylene (LLDPE)), Polyethylen geringer Dichte (low density polyethylene (LDPE)) Polyethylen ultrageringer Dichte (ultra low density polyethylene (ULDPE)), lineares Polyethylen geringer Dichte, hergestellt mit Metallocen-Katalysatoren (metallocene linear low density polyethylene (mLLDPE)), Polyethylen sehr geringer Dichte (very low density polyethylene (VLDPE)), Polyethylen mit geringem Molekulargewicht (low molecular weight polyethylene (LMWPE)), Polyethylen mittlerer Dichte (middle density polyethylene (MDPE)), Polyethylen mit ultrahohem Molekulargewicht (ultra high molecular weight polyethylene (UHMWPE)), Polyethylen mit hohem Molekulargewicht (high molecular weight polyethylene), Polyethylen mit Langkettenverzweigung und chemisch modifiziertes Polyethylen, Polypropylen mit hoher Schmelzefestigkeit (high melt strength polypropylene (PP-HMS)), Polypropylen (PP), Polyolefinelastomere, Polybutadien, heterophasisches Propylen-Copolymer, Propylen-Homopolymer (isotaktisch, syndiotaktisch, ataktisch und Mischformen), schlagzähmodifiziertes Polypropylen, Polypropylen mit Nukleierungsmittel, chemisch modifiziertes Polypropylen, verzweigtes Polypropylen mit kurzen und oder langen Seitenketten (long- bzw. shortchain-branching), Polypropylen katalysiert mit Ziegler-Natta- und / oder Metallocen- und/oder Übergangsmetall- und / oder Seltenerdmetallkoordinationsverbindungen und / oder single-site-Übergangsmetall- und / oder Seltenerdmetallkoordinationsverbindungen, Propylen-Homopolymer und / oder Propylen-Ethylen-Copolymer, geeignet zur Herstellung von biaxial-orientierten BOPP-Folien, Polybutylenhomo- und / oder Polybutylencopolymere, cyclische Polyolefincopolymere (COC, COP).

Ferner kann für den Kunststoff zum Einsatz kommen Polyvinylbutyral, Polyimid und / oder Polyetherimid und / oder Polyamidimid und / oder einem thermoplastischen Polyimid, Polyether, Polyetheretherketon, Polyketon, Polyetherketon, Polyetherketonketon, Polyaryletherketon, Polyphenylensulfid, Polyxylen, Polyester (Copolyester, Polyester-Schmelzklebstoffe), Polycarbonat, Acetal, Polyacetal (POM), Acrylate, Polyacrylate, Acrylatharze und Acrylatcopolymere, die als Monomere Alkyl(meth)acrylate mit Alkyl- und/oder Hydroxyalkylgruppen, die 1 bis 15 Kohlenstoffatome besitzen. Beispiele hierfür sind Methyl(meth)acrylat, Butyl(meth)acrylat, 2-Ethylhexyl(meth)acrylat, Hydroxyethyl(meth)acrylat, Hydroxypropyl(meth)acrylat, Ethylen-Acrylsäure-Butylacrylat-Terpolymer und Acrylkautschuk. Weitere mögliche Polymere sind Acetat, Polyvinylacetat, Polyacetat, Polyacetat-Copolymer, Ethylen-Vinylakohol-Copolymer, Polysulfon, Polyphenylensulfon, Polyethersulfon, Polyether, insbesondere Polyphenylenoxid, flüssigkristallines Polymer, ein Hochleistungsthermoplast, Fluorpolymer, insbesondere Fluorhomopolymer, Fluorcopolymer, fluorhaltigen Polyurethan, fluorierten Ethylen-Propylen (FEP), Polyvinylidenfluorid (PVDF), Ethylen-Chlortrifluorethylen-Copolymer (ECTFE), Ethylen-Tetrafluorethylen-Copolymer (ETFE), Polytetrafluorethylen (PTFE), Polychlortrifluorethylen (PCTFE), Tetrafluorethylen-Hexafluorpropen-Vinylidenfluorid-Copolymer (THV), Tetrafluorethylen-Perfluoralkylvinylether-Copolymer (PFA), chemisch modifiziertes und / oder funktionalisiertes Fluorpolymer (Maleinsäureanhydrid, Aconitsäureanhydrid, Itaconsäureanhydrid oder Acrylsäure oder Silanverbindungen), Polylactone, Polyvinylbutyral, Polyvinylalkohol, Polyvinylacetat, Polyoxazolin (Poly(2-ethyl-2-oxazolin)), Bioabbaubare Polymere,Polymer aus nachwachsenden Rohstoffen und / oder einem Biopolymer, umfassend Cellulosepolymere, Polymilchsäure, Polyhydroxyalkanoat PHA, Polyglycerolsebacat PGS, Poly(ethylen-2,5-furandicarboxylat) PEF, Polyhydroxybutyrat PHB, Poly(butylensuccinat) PBS, Polysaccharid, Polygluconsäure PGA) lonomere.

Im Rahmen der Erfindung liegen selbstverständlich auch Mischungen aus den vorgenannten Materialien.

Im Rahmen der Erfindung liegt es, dass zur Gewichtsreduzierung dem pulverförmigen Werkstoff vor der Bauteilherstellung dichtereduzierende Partikel zugesetzt werden, insbesondere Micro-Hohlkugeln mit einer geschlossenen Oberfläche. Vorzugsweise bestehen die Micro-Hohlkugeln aus einem amorphen Material und sind zweckmäßigerweise als Micro-Glashohlkugeln ausgebildet. Alternative Materialien für die Micro-Hohlkugeln sind beispielsweise Keramik oder Kunststoff. Micro-Hohlkugeln sind kommerziell verfügbar, sind sehr gleichförmig ausgebildet und werden vorzugsweise aus einem alkaliarmen Borosilikatglas gefertigt. Sie zeichnen sich durch eine chemische Inaktivität aus und verbinden niedrige Dichte mit einer hohen Druckfestigkeit. Die Micro-Hohlkugeln können in den pulverförmige Werkstoff eingemischt sein oder mit diesem compoundiert werden. Vorzugsweise weisen die Micro-Hohlkugeln einen mittleren Durchmesser von 3 bis 100 µm, vorzugsweise 15 bis 25 µm, auf. Die Wandstärke der Micro-Hohlkugeln beträgt zweckmäßigerweise 0,5 bis 10 µm, vorzugsweise 1 bis 3 µm. Zweckmäßigerweise beträgt im hergestellten Bauteil das Gewichtsverhältnis von Micro-Hohlkugeln zu pulverförmigem Werkstoff 0,5 bis 25 %, z.B. 1 bis 10 %, vorzugsweise 1,5 bis 5 %. Vorzugsweise weisen die Micro-Hohlkugeln eine, vorzugsweise siliziumhaltige, Oberflächenbeschichtung aufweisen. Hierdurch kann insbesondere die Anbindung der Oberfläche der Micro-Hohlkugeln an den Grundwerkstoff des Bauteils verbessert werden. Hierzu kann die Oberfläche der Mikro-Glashohlkugeln funktionelle Gruppen, ausgewählt aus Hydroxy- und / oder Amino- und / oder Imino- und / oder Imido- und / oder Amido- und / oder Carboxyl- und / oder Urethdion und / oder Ester und / oder Sulfonyl- und / oder Anhydrid- und / oder Aceto- und / oder Acryl- und / oder Phosphonyl- und / oder Epoxy- und / oder Silylgruppe aufweisen. Alternativ zu den Micro-Hohlkugeln können auch geschäumte Partikel verwendet werden.

Dem polymeren pulverförmigen Werkstoff kann ferner vor der Bauteilherstellung zusätzlich ein, vorzugsweise Cyanurate (bspw. Melamincyanurate) und/oder Polyphosphate (z.B. Melaminpolyphosphate) enthaltendes, Flammschutzmittel hinzugefügt werden, um die Brandschutzeigenschaften des Bauteils zu verbessern. Das Flammschutzmittel kann unter Einsatz eines Fließmittels in den pulverförmigen Werkstoff eingemischt werden. Der Gewichtsanteil des Fließmittels im fertig hergestellten Bauteil beträgt z.B. 0,1 bis 0,5 %. Zweckmäßigerweise beträgt im hergestellten Bauteil das Gewichtsverhältnis von Flammschutzmittel zu Micro-Hohlkugeln 20:1 bis 2:1, insbesondere 15:1 bis 4:1. Das Flammschutzmittel kann hierbei insbesondere einer durch die Micro-Hohlkugeln erhöhten Entflammbarkeit des Bauteils entgegenwirken, so dass die Bauteile mit geringer Dichte auch hohen Anforderungen an den Brandschutz genügen können.

Gegenstand der Erfindung ist auch ein erfindungsgemäß hergestelltes Bauteil, welches insbesondere im Luftfahrtbereich zum Einsatz kommen kann. Andere Anwendungszwecke sind hierdurch jedoch selbstverständlich nicht ausgeschlossen.

Im Folgenden wird die Erfindung anhand von Ausführungsbeispielen erläutert:

### Beispiel 1:

55 Gewichtsteile Polyamid-Pulver werden mit 45 Gewichtsteilen eines thermoplastischen Elastomers compoundiert und zu einem pulverförmigen Werkstoff vermahlt. Dem pulverförmigen Werkstoff werden 0,3 Gewichtsteile eines Fliessmittels mithilfe eines Mischers trocken untergemsischt. Das mit dem so gewonnenen Werkstoff im SLS-Verfahren hergestellte Bauteil weist gegenüber einem entsprechenden Bauteil ohne thermoplastischen Elastomeranteil eine um 750% höhere Schlagzähigkeit nach Charpy auf.

### Beispiel 2:

75 Gewichtsteile Polyamid-Pulver werden mit 25 Gewichtsteilen eines thermoplastischen Elastomers compoundiert und zu einem pulverförmigen Werkstoff vermahlt. Dem pulverförmigen Werkstoff werden 20 Gewichtsteile des Flammschutzmittels Melaminpolyphosphat, 2 Gewichtsteile Micro-Glashohlkugeln und 0,3 Gewichtsteile eines Fliessmittels mithilfe eines Mischers trocken untergemsicht. Das aus diesem Werkstoff im SLS-Verfahren hergestellte Bauteil ist flammschutzbeständig (festgestellt mittels 12s Vertical Burn Test), weist eine Gewichtreduktion von 2% gegenüber einem Bauteil ohne Micro-Glashohlkugeln und in etwa die gleiche Bruchdehnung auf wie Bauteile aus einem Material bestehend aus 100 Gewichtsteilen Polyamidpulver und 0,3 Gewichtsteilen Fiessmittel.

### Beispiel 3:

65 Gewichtsteile Polyamid-Pulver werden mit 35 Gewichtsteilen eines thermoplastischen Polyamidelastomers compoundiert und zu einem pulverförmigen Werkstoff vermahlt. Dem pulverförmigen Werkstoff werden 0,3 Gewichtsteile eines Fliessmittels mithilfe eines Mischers trocken untergemsischt. Das mit dem pulverförmigen Werkstoff im SLS-Verfahren hergestellte Bauteil weist gegenüber einem entsprechenden Bauteil ohne thermoplastischen Elastomeranteil eine um 750% höhere Schlagzähigkeit nach Charpy auf.

### Beispiel 4:

55 Gewichtsteile Polyamid-Pulver werden mit 45 Gewichtsteilen eines thermoplastischen Elastomers und 20 Gewichtsteile des Flammschutzmittels Melaminpolyphosphat compoundiert und vermahlt. Dem so erhaltenen Gemisch werden 2 Gewichtsteile Mikro-Glashohlkugeln und 0,3 Gewichtsteils eines Fliessmittels mithilfe eines Mischers trocken untergemischt und das Material wird in einem SLS-Prozess verarbeitet.

### Beispiel 5:

55 Gewichtsteile Polyamid-Pulver werden mit 45 Gewichtsteilen eines thermoplastischen Elastomers und 10 Gewichtsteilen des Flammschutzmittels Melamincyanurat compoundiert und vermahlt. Dem so erhaltenen Gemisch werden 2 Gewichtsteile Mikro-Glashohlkugeln und 0,3 Gewichtsteile eines Fliessmittels mithilfe eines Mischers trocken untergemischt und das Material wird in einem SLS-Prozess verarbeitet.

### Beispiel 6:

55 Gewichtsteile Polyamid-Pulver werden mit 45 Gewichtsteilen eines thermoplastischen Elastomers, 20 Gewichtsteilen des Flammschutzmittels Melaminpolyphosphat und 2 Gewichtsteilen Micro-Glashohlkugeln compoundiert und vermahlt. Dem so erhaltenen Gemisch werden 0,3 Gewichtsteile eines Fliessmittels mithilfe eines Mischers trocken untergemsischt und das Material wird danach in SLS-Verfahren verarbeitet.

### Beispiel 7:

55 Gewichtsteile Polyamid-Pulver werden mit 45 Gewichtsteilen eines thermoplastischen Elastomers, 10 Gewichtsteilne des Flammschutzmittels Melamincyuanurat und 2 Gewichtsteilen Micro-Glashohlkugeln compoundiert und vermahlt. Dem so erhaltenen Gemisch werden 0,3 Gewichtsteilen eines Fliessmittels mithilfe eines Mischers trocken untergemischt und das Material wird in einem SLS-Prozess verarbeitet.

## Patentansprüche

1. Verfahren zur Herstellung eines Bauteils im Wege der additiven Fertigung, insbesondere durch selektives Lasersintern, wobei als Grundmaterial ein pulverförmiger Werkstoff aus Kunststoff eingesetzt wird, der ein Blend aus einem Polyamid sowie zur Verbesserung der Schlagzähigkeitseigenschaften des Bauteils ein thermoplastisches Elastomer enthält, und wobei im hergestellten Bauteil der Gewichtsanteil des thermoplastischen Elastomers 10 bis 50 %, insbesondere 20 bis 40 %, beträgt.

2. Verfahren nach Anspruch 1, **dadurch gekennzeichnet, dass** als thermoplastisches Elastomer ein TPE-A, TPE-O, TPE-V, TPE-E, TPE-S oder TPE-U verwendet wird.

3. Verfahren nach einem der Ansprüche 1 oder 2, **dadurch gekennzeichnet, dass** dem pulverförmigen Werkstoff vor der Bauteilherstellung dichtereduzierende Partikel zugesetzt werden, insbesondere Micro-Hohlkugeln mit einer geschlossenen Oberfläche.

4. Verfahren nach Anspruch 3, **dadurch gekennzeichnet, dass** die Micro-Hohlkugeln als Micro-Glashohlkugeln ausgebildet sind.

5. Verfahren nach Anspruch 3 oder 4, **dadurch gekennzeichnet, dass** die Micro-Hohlkugeln einen mittleren Durchmesser von 3 bis 100 µm, vorzugsweise 15 bis 25 µm, aufweisen.

6. Verfahren nach einem der Ansprüche 3 bis 5, **dadurch gekennzeichnet, dass** die Micro-Hohlkugeln eine Wandstärke von 0,5 bis 10 µm, vorzugsweise 1 bis 3 µm, aufweisen.

7. Verfahren nach einem der Ansprüche 3 bis 6, **dadurch gekennzeichnet, dass** im hergestellten Bauteil das Gewichtsverhältnis von Micro-Hohlkugeln zu pulverförmigem Werkstoff 0,5 bis 25 %, z.B. 1 bis 10 %, vorzugsweise 1,5 bis 5 %, beträgt.

8. Verfahren nach einem der Ansprüche 3 bis 7, **dadurch gekennzeichnet, dass** die Micro-Hohlkugeln eine, vorzugsweise siliziumhaltige, Oberflächenbeschichtung aufweisen.

9. Verfahren nach einem der Ansprüche 1 bis 8, **dadurch gekennzeichnet, dass** dem pulverförmigen Werkstoff vor der Bauteilherstellung zusätzlich ein, vorzugsweise Cyanurate und/oder Polyphosphate enthaltendes, Flammschutzmittel zugesetzt wird.

10. Bauteil hergestellt mit einem Verfahren nach einem der Ansprüche 1 bis 9.

## Claims

1. Method for manufacturing a component by means of additive manufacturing, in particular by selective laser sintering, wherein a powdered plastic material is used as the base material, which contains a blend of a polyamide and a thermoplastic elastomer to improve the impact strength properties of the component, and wherein the weight proportion of the thermoplastic elastomer in the manufactured component is 10 to 50%, in particular 20 to 40%.

2. Method according to claim 1, **characterised in that** a TPE-A, TPE-O, TPE-V, TPE-E, TPE-S or TPE-U is used as the thermoplastic elastomer.

3. Method according to either one of claims 1 to 2, **characterised in that** the density-reducing particles are added to the powdered material before the component is manufactured, in particular hollow microspheres with a closed surface.

4. Method according to claim 3, **characterised in that** the hollow microspheres are formed as glass hollow microspheres.

5. Method according to claim 3 or 4, **characterised in that** the hollow microspheres have an average diameter of 3 to 100 µm, preferably 15 to 25 µm.

6. Method according to any one of claims 3 to 5, **characterised in that** the hollow microspheres have a wall thickness of 0.5 to 10 µm, preferably 1 to 3 µm.

7. Method according to any one of claims 3 to 6, **characterised in that** the weight ratio of hollow microspheres to powdered material in the manufactured component is 0.5 to 25%, e.g. 1 to 10%, preferably 1.5 to 5%.

8. Method according to any one of claims 3 to 7, **characterised in that** the hollow microspheres have a surface coating preferably containing silicon.

9. Method according to any one of claims 1 to 8, **characterised in that** a flame retardant, preferably containing cyanurates and/or polyphosphates, is additionally added to the powdered material before the component is manufactured.

10. Component manufactured using a method according to any one of claims 1 to 9.

## Revendications

1. Procédé de fabrication d'un composant par fabrication additive, notamment par frittage sélectif au laser, dans lequel on utilise en tant que matériau de base une matière pulvérulente en plastique qui contient un mélange d'un polyamide ainsi qu'un élastomère thermoplastique pour améliorer les propriétés de résistance aux chocs du composant, et dans lequel, dans le composant fabriqué, la proportion en poids de l'élastomère thermoplastique est de 10 à 50 %, notamment de 20 à 40 %.

2. Procédé selon la revendication 1, **caractérisé en ce qu'**un TPE-A, TPE-O, TPE-V, TPE-E, TPE-S ou TPE-U est utilisé en tant qu'élastomère thermoplastique.

3. Procédé selon l'une quelconque des revendications 1 ou 2, **caractérisé en ce que** des particules réduisant la densité sont ajoutées à la matière pulvérulente avant la fabrication du composant, notamment des microsphères creuses avec une surface fermée.

4. Procédé selon la revendication 3, **caractérisé en ce que** les microsphères creuses sont des microsphères creuses de verre.

5. Procédé selon la revendication 3 ou 4, **caractérisé en ce que** les microsphères creuses présentent un diamètre moyen de 3 à 100 µm, de préférence de 15 à 25 µm.

6. Procédé selon l'une quelconque des revendications 3 à 5, **caractérisé en ce que** les microsphères creuses présentent une épaisseur de paroi de 0,5 à 10 µm, de préférence de 1 à 3 µm.

7. Procédé selon l'une quelconque des revendications 3 à 6, **caractérisé en ce que**, dans le composant fabriqué, le rapport en poids des microsphères creuses à la matière pulvérulente est de 0,5 à 25 %, p. ex. de 1 à 10 %, de préférence de 1,5 à 5 %.

8. Procédé selon l'une quelconque des revendications 3 à 7, **caractérisé en ce que** les microsphères creuses présentent un revêtement de surface, de préférence contenant du silicium.

9. Procédé selon l'une quelconque des revendications 1 à 8, **caractérisé en ce qu'**un agent ignifugeant, contenant de préférence des cyanurates et/ou des polyphosphates, est en outre ajouté au matériau pulvérulent avant la fabrication du composant.

10. Composant fabriqué par un procédé selon l'une quelconque des revendications 1 à 9.
